(19) Europäisches Patentamt
European Patent Office
Office européen des brevets

(11) Publication number: **0 130 594**
**B1**

(12) **EUROPEAN PATENT SPECIFICATION**

(45) Date of publication of patent specification: **16.09.87**

(51) Int. Cl.⁴: **C 03 C 3/32,** C 03 C 4/10

(21) Application number: **84107565.8**

(22) Date of filing: **29.06.84**

# (54) Process for producing materials with optical transparency in the infrared.

(30) Priority: **30.06.83 IT 6771583**

(43) Date of publication of application:
**09.01.85 Bulletin 85/02**

(45) Publication of the grant of the patent:
**16.09.87 Bulletin 87/38**

(84) Designated Contracting States:
**AT BE CH DE FR GB LI NL SE**

(56) References cited:
**US-A-3 657 006**

**CHEMICAL ABSTRACTS, vol. 95, no. 16, October 1981, page 277, no. 137141c, Columbus, Ohio, USA**
**CHEMICAL ABSTRACTS, vol. 95, no. 16, 19th October 1981, no. 137140b, Columbus, Ohio, USA**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Modone, Eros**
**Via Cibrario 45**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 130 594 B1

**Description**

The present invention relates to the fabrication of transparent materials for optical applications and in particular it concerns a process for producing chalcogenides with optical transparency in the infra-red, as stated in the prior art portion of claim 1.

As known the problems encountered in the traditional production of transparent materials with wavelengths ranging from 2 to 12 μm are caused both by inevitable manipulations during the various process phases in which transfers and annealings are effected and by interactions of the reactants with the outside; atmosphere and containers. The result is that an increase occurs in both intrinsic and extrinsic attenuation of the transmissive means.

Intrinsic attenuation is due to direct absorption by material-impurity bonds, and extrinsic attenuation is due to the presence of anomalous domains (scattering attenuation). In particular if the material is crystalline, dislocations or grains can be formed, if the material is vitreous, crystalline zones or different-density phase separations can be generated.

A process which permits cost-effective, durable and high-purity materials to be obtained is chemical vapour deposition (CVD).

This process, used to fabricate electronic components and silica-based optical fibres consists of a red-ox reaction between two vapours from which a solid and residual vapours are obtained (e.g. US—A—3 657 006; Chemical Abstracts, Vol. 95, No. 16, 19th October 1981, page 227, No. 1371406 and No. 137141c). For instance silicon for semiconductors can be obtained from the following reactions:

$$SiHCl_3+H_2 \rightarrow Si+3HCl \qquad (1)$$

or

$$SiCl_4+H_2 \rightarrow Si+2HCl \qquad (2)$$

where the reaction is started in a high-temperature furnace.

In optical fibre technology silica is obtained from the reaction:

$$SiCl_4+O_2 \rightarrow SiO_2+2Cl_2 \qquad (3)$$

whilst for infrared materials a CVD process exists which produces ZnS and ZnSe through reactions:

$$Zn+H_2S \rightarrow ZnS+H_2 \qquad (4)$$

and

$$Zn+H_2Se \rightarrow ZnSe+H_2 \qquad (5)$$

From the reaction above it is to be noted that generally the CVD process makes use of red-ox reactions. Yet said reactions present the disadvantage of possible concurrent reactions, entailing different valence states, whose products are different from those desired and are often detrimental. For example, in reaction (4) ZnH groups may be formed in the matrix, (where zinc valence is not 2 but 1). They present optical-absorption bands within the range of interest comprised between 2 and 12 μm.

The present invention overcomes these disadvantages by providing a CVD process where a double substitution reaction is used instead of a red-ox reaction. This kind of reaction does not entail any variation in the oxidation state of any element among the reactants, but only the double substitution between reactant cations and anions.

The present invention provides a process for producing chalcogenides with optical transparency in the infrared, wherein reactants are separately vaporized at their corresponding boiling temperatures and are sent in the vapour state to a reaction zone where the reaction is thermally started, and wherein residual products occur, characterized in that the chalcogenides which have a melting temperature higher than the boiling temperatures of the reactants and of the residual products are produced by a double substitution reaction between chalcogenic acids and salts of the metals which are to be converted into chalcogenides.

This reaction is extremely advantageous, as it eliminates concurrent reactions whenever the desired reaction product is in an aggregation state different from those of the other products and of the reactants.

In this case the equilibrium is entirely shifted towards the reaction products and the desired product is easy to separate. Moreover, if the reactants and residual products are gaseous and the desired product is solid, a continuous production process is possible. Besides, if reactant and residual product boiling temperatures are much lower than the desired-solid melting temperature the process requires low energy and features an efficiency near 100%.

The foregoing and other characteristics of the invention will be made clearer by the following description of a preferred embodiment thereof, given by way of example and not in a limiting sense.

The object is to provide high-purity chalcogenides useful as starting materials to produce glass, crystals and multicrystals to be used in laser and optical-fibre technologies.

These materials present a wide transmission window in the infrared, with low absorption coefficients and theoretical attenuation of nearly $10^{-2}$ dB/km at 5 to 6 μm. The thermal expansion coefficient is about $10^{-6}$°$K^{-1}$, which renders drawing of the produced glass possible. Optical fibres can then be manufactured.

The refractive index values are relatively high, around 2, which allows a step-index glass-plastic fibre to be manufactured.

An example of double substitution reaction apt to produce a chalcogenide, such as arsenic trisulphide, is the following:

$$3H_2S + 2AsCl_3 \rightarrow As_2S_3 + 6HCl \quad (6)$$

where at the reaction temperature reactants and hydrochloric acid are in gaseous state and arsenic trisulphide is a solid. Similar reactions are those among $H_2S$ and $GeCl_4$, $SnCl_4$, $PCl_3$, $SiCl_4$, with production of $GeS_2$, $SnS_2$, $P_2S_3$, $SiS_2$. Reactions requiring higher temperature can take place amoung $H_2S$ and $SBCl_3$, $ZnCl_2$, $SnCl_2$, $CdCl_2$, with production of $Sb_2S_3$, ZnS, SnS, CdS.

Generally, the reaction of double substitution between a chalcogenic acid ($H_2S$, $H_2Se$, $H_2Te$) and a salt of the metal whose chalcogenide is desired, is useful to infrared material production.

The salt obtained must have a higher melting temperature than the reactant and residual-material boiling temperatures.

A number of the above reactants can be used simultaneously to obtain different solid material mixtures which can constitute the starting material for predetermined-composition glasses.

The scheme of the arrangement for producing chalcogenides with the type of reactions described is similar to that of the conventional CVD process, where the reactants are separately vaporized at the corresponding boiling temperatures and are kept under the vapour state up to the reaction zone. At that instant the double substitution reaction is started, and the high-melting salt thus produced precipitates and then is gathered and used. By a suitable adjustment of pressures and temperatures in the reaction chamber and in vaporization lines according to vaporization temperatures of products, materials in the desired structure, i.e. colloidal, microcrystalline, crystalline or vitreous, can be obtained.

For example, the reaction (6) can be started by raising the reactor to a temperature of about 200°C, as the fusion temperature of $As_2S_3$ produced is of 300°C and maximum vaporization temperature is 63°C for $AsCl_3$. This reaction may already take place at the atmospheric pressure by regulating in a stoichiometric way the proportion of reactants by flowmeters.

**Claims**

1. Process for producing chalcogenides with optical transparency in the infrared, wherein reactants are separately vaporized at their corresponding boiling temperatures and are sent in the vapour state to a reaction zone, where the reaction is thermally started, and wherein residual products occur, characterized in that the chalcogenides which have a melting temperature higher than the boiling temperatures of the reactants and of the residual products are produced by a double substitution reaction between chalcogenic acids and salts of the metals which are to be converted into chalcogenides.

2. A process as in claim 1, characterized in that the temperature at which the reaction takes place ranges between the boiling temperature of the reactants and of the residual products and the melting temperature of said chalcogenides.

3. A process as in claims 1 or 2, characterised in that among the above-mentioned chalcogenic acids $H_2S$, $H_2Se$, $H_2Te$ are used.

4. A process as in any one of the preceding claims, characterized in that among said salts of the metal, the chalcogenides of which are to be produced, $AsCl_3$, $SbCl_3$, $ZnCl_2$, $GeCl_4$, $SnCl_4$, $PCl_3$, $SiCl_4$, $CdCl_2$, $SnCl_2$ are used.

5. A process as in any one of the preceding claims, characterised in that two or more different chalcogenides are produced by making different reactants react at the same time in order to obtain different solid-material mixtures apt to form the starting material for optical devices with a predetermined composition.

**Patentansprüche**

1. Verfahren zum Herstellen von Chalkogeniden mit optischer Durchlässigkeit im Infrarot, wobei man Reaktionsstoffe getrennt bei ihren jeweiligen Siedetemperaturen, verdampt und sie im Dampfzustand in eine Reaktionszone leitet, wo man die Reaktion thermisch startet und wo Restprodukte auftreten, dadurch gekennzeichnet, daß man die Chalkogenide, die eine über den Siedetemperaturen der Reaktionsstoffe und der Restprodukte liegende Schmelztemperatur haben, durch eine Doppelsubstitutionsreaktion zwischen Chalkogensäuren und Salzen der Metalle, die in Chalkogenide umzuwandeln sind, erzeugt.

2. Verfahren nach Anspruch 1, dadurch gekennzeichnet, daß die Temperatur, bei der die Reaktion stattfindet, zwischen der Siedetemperatur der Reaktionsstoffe und der Rest produkte und der Schmelztemperatur der Chalkogenide liegt.

3. Verfahren nach Anspruch 1 oder 2, dadurch gekennzeichnet, daß unter den Chalkogensäuren $H_2S$, $H_2Se$ und $H_2Te$ verwendet werden.

4. Verfahren nach einem der vorhergehenden Ansprüche, dadurch gekennzeichnet, daß als Salze des Metalls, dessen Chalkogenide hergestellt werden sollen, $AsCl_3$, $SbCl_3$, $ZnCl_2$, $GeCl_4$, $SnCl_4$, $PCl_3$, $SiCl_4$, $CdCl_2$, $SnCl_2$ verwendet werden.

5. Verfahren nach einem der vorhergehenden Ansprüche, dadurch gekennzeichnet, daß man zwei oder mehr verschiedene Chalkogenide erzeugt, indem man verschiedene Reaktionsstoffe gleichzeitig reagieren läßt, um Gemische unterschiedlicher Feststoffe zu erhalten, die das Anfangsmaterial für optische Bauteile mit gegebener Zusammensetzung bilden können.

**Revendications**

1. Procédé pour la production de chalcogénures avec transparence optique dans l'infrarouge, où les réactifs sont vaporisés séparément aux températures respectives d'ébullition et sont envoyés à l'état de vapeur jusqu'à une zone de réaction, où la réaction est déclenchée par la température et les produits résiduels se forment, caractérisé en ce que les chalcogénures qui ont une température de fusion plus élévée que la température d'ébullition des réactifs et des produits résiduels sont

produits par une réaction de double échange entre des acides chalcogénhydriques et des sels des métaux qui sont à transformer en chalcogénures.

2. Procédé suivant la revendication 1, caractérisé en ce que la température à laquelle la réaction est déclenchée est comprise entre la température d'ébullition des réactifs et des produits résiduels et la température de fusion desdits chalcogénures.

3. Procédé suivant la revendication 1 ou 2, caractérisé en ce que $H_2S$, $H_2Se$, $H_2Te$ sont employés parmi lesdits acides chalcogénhydriques.

4. Procédé suivant l'une quelconque des revendications qui précèdent, caractérisé en ce que $AsCl_3$, $SbCl_3$, $ZnCl_2$, $GeCl_4$, $SnCl_4$, $PCl_3$, $SiCl_4$, $CdCl_2$, $SnCl_2$, sont utilisés parmi les sels du métal dont les chalcogénures sont à produire.

5. Produiré selon l'une quelconque des revendications qui précèdent, caractérisé en ce que deux ou plus des susdits chalcogénures sont produits en faisant réagir en même temps des réactifs divers pour obtenir des mélanges de divers matériaux solides, aptes à constituer le matériau de départ pour les dispositifs optiques à composition déterminée.